# EUROPÄISCHE PATENTSCHRIFT

(11) **EP 0 584 677 B1**
(45) Veröffentlichungstag und Bekanntmachung des Hinweises auf die Patenterteilung: **23.12.1998**
(21) Anmeldenummer: 93113004.1
(22) Anmeldetag: 13.08.1993
(51) Int. Cl.: C08B 3/00, C08B 3/14, C08G 63/664

(54) **Thermoplastische, biologisch abbaubare Celluloseester und Verfahren zu ihrer Herstellung**
Biologically degradable thermoplastic cellulose esters and process for producing the same
Esters de cellulose thermoplastique, biologiquement dégradable et procédé pour leur préparation

(30) Priorität: 26.08.1992 DE 4228376
(43) Veröffentlichungstag der Anmeldung: 02.03.1994
(73) Patentinhaber: Wolff Walsrode Aktiengesellschaft, D-29655 Walsrode (DE)
(72) Erfinder: Kalbe, Jochen, Dr., D-45219 Essen (DE); Müller, Hanns Peter, Dr., D-51519 Odenthal (DE); Weber, Gunter, Dr., D-29683 Fallingbostel (DE)
(74) Vertreter: Hellfeldt, Kurt, Dr.

(56) Entgegenhaltungen:
- DE-A- 3 322 118
- GB-A- 2 158 081
- MACROMOLECULES. Bd. 23, Nr. 15 , 1990 , EASTON US Seiten 3606 - 3610 C. L. MCCORMICK 'Preparation of cellulose derivatives via ring-opening reactions with cyclic reagents in lithium chloride/N,N-dimethylacetamide'
- TEXTILE RESEARCH JOURNAL , vol., no. 24, 1954, page 738 - 744, GAUL GEORGE C. 'THE REACTION OF COTTON WITH BETA-PROPIOLACTONE '

## Beschreibung

Die vorliegende Erfindung betrifft thermoplastische, biologisch abbaubare Celluloseester sowie die Herstellung von solchen Celulosehydroxycarbonsäureestern durch Reaktion von ungelöster Cellulose mit Lactonen.

Reaktionen von Lactonen mit Cellulose sind bereits bekannt und beschrieben. Hierzu gehört hauptsächlich die Verbesserung der Fasereigenschaften von Baumwolle wie z.B. das Wasseraufnahmeverhalten, die thermische Beständigkeit und das Alterungsverhalten durch Umsetzung der Faser in organischen Lösungsmitteln mit β-Propiolacton (vergl. z.B. US-PS 2 721 784, R.M. Reinhardt, Textile Research Journal, 26, 1956, 1 bis 9, G.C. Daul, Textile Research Joumal, 24, 1954, 738 bis 743, G.C. Daul, Textile Research Journal, 25, 1955, 330 bis 333).

Hierzu wird die Faser in unpolaren organischen Lösungsmitteln mit β-Propiolacton alkali- oder säurekatalysiert, aber auch ohne Katalysator, umgesetzt und anschließend wieder vom Lösungsmittel befreit. Während dieses Prozesses verändert die Faser ihren Kristallisationsgrad und liegt anschließend in einem aufgequollenen Zustand vor. Die Faser selbst bleibt während dieses Prozesses erhalten und ist daher als modifizierte Baumwollfaser zu betrachten, und nicht als Polymer mit inhärent neuen Eigenschaften.

Die Umsetzung von weniger reaktiven Lactonen wie z.B. ε-Caprolacton oder Lactid oder Glykolid mit Cellulose bzw. partiell anhydrolisierten Celluloseestern ist in den US-PS 4 443 595 und DE-A 3 512 079 und einer Publikation (C.L. McCormick, Macromolecules, 23, 1990, 3606 bis 3610) beschrieben.

Zur Durchführung dieser Reaktion muß die Cellulose allerdings in Lösung gebracht werden. Dies geschieht entweder durch Lösen in einem typischen Celluloselösungsmittel wie z.B. Dimethylacetamid (DMAc/LiCl) oder durch den Einsatz partiell anhydrolisierter Celluloseester, die in organischen Lösungsmitteln löslich sind. Die Verwendung solcher Celluloseester führt allerdings zu Mischesterprodukten und nicht zu den reinen Cellulosehydroxycarbonsäureestern.

Wegen der geringen Löslichkeit von Cellulose in DMAc/LiCl ist die Darstellung der Lösung zeitaufwendig und es lassen sich nur hochverdünnte Lösungen (1 bis 5 %ig bezgl. Cellulosegehalt) herstellen. Hierdurch entstehen schlechte Raum-Zeit-Ausbeuten. Ein weiterer Kostenfaktor ist die Verwendung von LiCl und seiner aufwendigen Abtrennung aus den entstehenden Produkten. Außerdem gelingt mit dieser Methode nur die Synthese sehr niedrig substituierter, wasserlöslicher Cellulosetypen ohne thermoplastische Eigenschaften. Die Synthese höherer Substitutionsgrade, die gerade zur Erzielung von Thermoplastizität und zur Einstellung diskreter mechanischer Eigenschaften von äußerster Wichtigkeit sind, gelingt mit diesen Methoden nicht.

Vorliegende Erfindung setzt sich zum Ziel, thermoplastische, biologisch abbaubare Celluloseester sowie ein Verfahren zu deren Herstellung zur Verfügung zu stellen, das es ermöglicht, Cellulose so mit Lactonen zu derivatisieren, daß beliebige Substitutionsgrade erreicht und damit auch variable Eigenschaftsprofile eingestellt werden und dabei ökonomisch akzeptable Raum-Zeit-Ausbeuten erzielt werden können.

Gegenstand der Erfindung sind somit thermoplastische, biologisch abbaubare Celluloseester gemäß Anspruch 1. Gegenstand der vorliegenden Erfindung ist ferner ein Verfahren zur Herstellung von derartigen, wasserunlöslichen, thermoplastischen und biologisch abbaubaren Cellulosehydroxycarbonsäureestem, das dadurch gekennzeichnet ist, daß Cellulose ungelöst, d.h. ohne Verwendung cellulosespezifischer Lösungsmittel, mit Lactonen zur Reaktion gebracht wird, wobei man die Cellulose mit Alkalilauge aktiviert und anschließend in Suspension mit Lactonen umsetzt und wobei der entstehende Celluloseester in dem verwendeten Suspensionsmittel löslich ist.

Die nach diesem Verfahren erfindungsgemäß herzustellenden Cellulosehydroxycarbonsäureester lassen sich durch die allgemeine Struktur 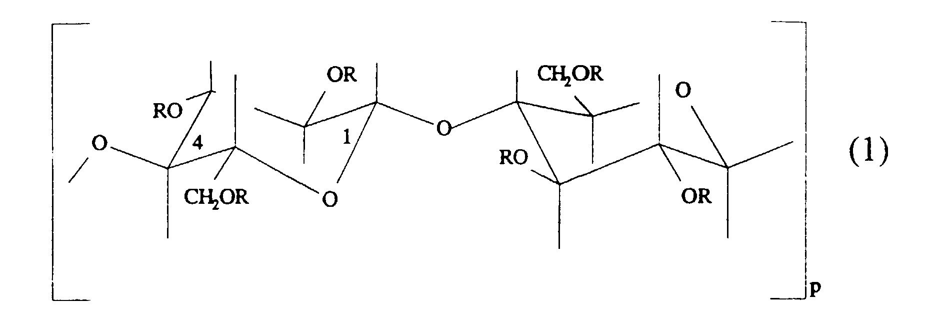 beschreiben, wobei R entweder ein mono- und/oder polymerer Hydroxycarbonsäureester folgender Struktur ist: 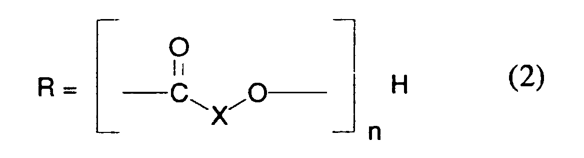 in der x eine verzweigte oder unverzweigte aliphatische Kette mit 2 bis 5 C-Atomen bedeutet und n eine ganze Zahl größer als 5 ist, oder R ist entsprechend dem durchschnittlichen Substitutionsgrad gleich H.

Gegenstand der Erfindung sind ferner Cellulosehydroxycapronsäureester für die n größer als 5 ist.

Zur Synthese wird Zellstoff oder Baumwollinters mit Alkalilauge aktiviert. Diese Aktivierung kann durch die Synthese und Isolierung einer Alkalicellulose geschehen, die dann in geeigneten Lösungsmitteln wie z.B. Dimethylsulfoxid (DMSO), DMAc oder Dimethylformamid (DMF) suspendiert wird. Ebenso kann die Aktivierung durch Herstellung einer Suspension in diesen wassermischbaren Lösungsmitteln und an¶ schließender Zugabe einer wäßrigen Alkalilösung vorgenommen werden. Hierbei wird nach Durchführung der Aktivierung das eingesetzte Wasser wieder abdestilliert.

Anschließend wird zu dieser Suspension im wasserfreien Lösungsmittel Lacton gegeben, das mit der Cellulose reagiert. Die Cellulose geht während der Reaktion in Lösung. Hierbei ist als außerordentlich überraschend anzusehen, daß das Lacton in einer Zweiphasen-Reaktion (fest-flüssig) in der Lage ist, die in ungelöster Form durch OH-Brücken stark vernetzte und damit inaktive Cellulose zu derivatisieren ohne mit sich selbst zu reagieren.

Nach Beendigung der Reaktion wird das entstandene, wasserunlösliche Polymer in Wasser ausgefällt, abfiltriert und getrocknet. Hierbei ist die Unlöslichkeit in Wasser überraschend, da die formell ähnlichen Verbindungen gemäß US-PS 4 443 595 als gut wasserlöslich beschrieben werden.

Das so synthetisierte Polymer ist je nach eingestelltem Substitutionsgrad spritzgußfähig, thermoplastisch oder auch zu Formteilen verpreßbar.
Weiterhin ist es in jedem Fall biologisch abbaubar und kompostierbar.
Die biologische Abbaubarkeit der mit diesem Verfahren synthetisierten Polymere ist ebenfalls völlig überraschend, da bekannterweise Celluloseester mit durchschnittlichen Substitutionsgraden (DS) größer als 2,5 nicht als biologisch abbaubar gelten. Die hier synthetisierten Celluloseester sind dagegen bei allen DS-Werten zwischen 0,1 und 3,0 und allen mittleren Substitutionsgraden (MS) größer als 3,0 gut biologisch abbaubar.

Für die Synthese ist technisch zugängliche Cellulose, wie z.B. Holzzellstoff und Baumwollinters beliebigen Molgewichts geeignet. Die eingesetzten Faserlängen sind beliebig, bevorzugt kürzer als 2 000 µm, besonders bevorzugt kürzer als 1 000 µm. Als Lösungsmittel eignen sich wassermischbare Verbindungen oder Mischungen aus ihnen wie DMSO, DMF, DMAc, Dioxan, Acetonitril, THF, Pyridin, NMP, und Methyl-Morpholin, weniger geeignet sind Alkohole.

Als Lactone sind z.B. β-Propiolacton, γ-Butyrolacton, β-Butyrolacton, δ-Valerolacton, γ-Valerolacton, Glykolid, Lactid und besonders bevorzugt ε-Caprolacton geeignet.

Die Aktivierung der Cellulose erfolgt mit Alkalilauge. Hierbei können verschiedene Methoden angewendet werden.

Zum einen kann eine Alkalicellulose durch Vorbehandlung der Cellulose mit wäßriger Alkalilauge, anschließender Filtration und Trocknung hergestellt werden. Die Konzentration der Natronlaugelösung beträgt hierbei 5 bis 50Gew.-%, vorzugsweise 10 bis 25 %, besonders bevorzugt 20 Gew.-%.

Der NaOH-Gehalt der so hergestellten Alkalicellulose beträgt 1 bis 30 Gewichtsprozent, vorzugsweise 5 bis 15 Gewichtsprozent.

Diese Alkalicellulose wird im Lösungsmittel suspendiert und mit dem Lacton zur Reaktion gebrachL

Die Reaktionstemperatur beträgt hierzu 60 bis 170°C, in DMSO bevorzugt 100 bis 170°C, besonders bevorzugt 140 bis 160°C, bei Lösungsmitteln mit Siedepunkten unter 120°C kann unter Rückfluß gearbeitet werden.

Zum anderen kann die Cellulose sofort im Lösungsmittel suspendiert und die Aktivierung mit wäßriger Natronlauge im Lösungsmittelsystem vorgenommen werden. Hierbei beträgt die eingesetzte Menge Alkalihydroxid molar das 1 bis 3fache der eingesetzten Glucoseeinheiten der Cellulose. Die Wassermenge wird so gewählt, daß bezüglich des Alkalihydroxids Konzentrationen zwischen 5 und 50 %, vorzugsweise zwischen 15 und 25 % entstehen.
Die Aktivierungstemperatur ist je nach eingesetztem Cellulosetyp 20 bis 80°C. Als Aktivierungszeit werden 0,5 bis 24 h benötigt. Anschließend wird das im Reaktionsansatz vorhandene Wasser abdestilliert, bis es laut Brechungsindex nicht mehr nachzuweisen ist und die Reaktion mit dem Lacton wie oben beschrieben durchgeführt.

Die nach dem erfindungsgemäßen Verfahren hergestellten Cellulosehydroxycarbonsäureester sind im Unterschied zu den in US-PS 4 443 595 beschriebenen Derivaten wasserunlöslich, dagegen löslich in Alkoholen wie n-Butanol oder n-Propanol und in anderen organischen Lösungsmitteln wie DMSO, DMF, Dioxan und THF.

Weiterhin sind die so synthetisierten Cellulosehydroxycarbonsäureester thermoplastisch und mit den herkömmlichen Verarbeitungstechniken in z.B. Spritzgußformteile oder Folien überführbar.

Die erfindungsgemäßen Cellulosederivate sind geeignet zur Herstellung von biologisch abbaubaren Folien, Töpfen, Flaschen und anderen Formkörpern. Sie können in ihren Eigenschaften durch die Herstellung von Blends beliebiger Zusammensetzung mit anderen biologisch abbaubaren Komponenten, wie z.B. Stärke oder underivatisierte Cellulose, variiert werden. Die Kombination mit Weichmachem ist dabei ebenfalls möglich.

Diese erwünschten Eigenschaften der wasserunlöslichen, thermoplastischen und auch bei hohen Substitutionsgraden biologisch abbaubaren Cellulosederivate, waren nach dem Stand der Technik nicht zu erwarten und sind völlig überraschend.

Die Eigenschaft der Kompostierbarkeit wird wie folgt definiert:
Die zu testenden Polymere werden in einem Flüssigmedium nach ASTM G22 (Zusammensetzung Tab. 1) mit einer Mischung von Mikroorganismen aus Gartenkompost unter Schwenken (220 upm) und Luftzutritt bei 37°C inkubiert Hierzu wird ca. 200mg des Polymeren als Granulat in 50ml Nährsalz-Lösung in 250ml Erlenmeyerkolben mit 0,4 ml einer Suspension von 10 g Gartenkompost in 100 ml Nährsalzlösung beimpft. Aus der Kompostsuspension werden vorher grobe Teile über ein Feinsieb abgetrennt. Der Trockensubstanz(TS)-Gehalt der Animpfmenge beträgt dann ca. 10 mg. Als Kontrolle zur Messung des abiotischen Gewichtsverlusts der Polymerprobe wird ein Ansatz mit HgCl₂ (500 mg/l) versetzt. Weitere Kontrollansätze enthalten Cellulose (4 g/l, Fa. Wolff Walsrode) und ε-Caprolacton 200 mg/50 ml NL zur Überprüfung des Wachstums mit einem natürlichen Substrat bzw. werden ohne Zusatz einer C-Quelle zur Bestimmung des Hintergrundwachstums angesetzt.

**Tabelle 1**

| Zusammensetzung der Nährsalzlösung nach ASTM G22 | |
|---|---|
| KH₂PO₄ | 0,7 g |
| K₂HPO₄ | 0,7 g |
| MgSO₄·7H₂O | 0,7 g |
| NH₄NO₃ | 0,1 g |
| NaCl | 0,005 g |
| FeSO₄·7H₂O | 0,002 g |
| ZnSO₄·7H₂O | 0,002 g |
| MnSO₄·H₂O | 0,001 g |
| H₂O dest. | 1 000,0 ml |

Zur Messung der Biomasse wird ebenfalls der gesamte Inhalt eines Kolbens aufgearbeitet. Hierzu wird eine Modifizierung der Adenosintriphosphat (ATP)-Bestimmung der Firma Lumac-3M verwendet: 10 Minuten nach der Zugabe der Reaktivreagenzes (Lumac) werden 0,5 ml einer 40 gew.-%igen Tetrabutylammoniumhydroxydlösung zugegeben. Dies führt zu einer vollständigen ATP-Freisetzung aus der gesamten Biomasse innerhalb von 30 Sekunden. Nach dieser Zeit kann der ATP-Gehalt mit der üblichen Luciferin/Luciferase-Reaktion bestimmt werden. Zur Korrelation des ATP-Gehaltes mit der Trockensubstanz wird eine 16 h-Kultur von K1. planticola gemessen, deren ATP/Trockensubstanz-Verhältnis -Verhältnis vorher bestimmt wird.

Als gut kompostierbar im erfindungsgemäßen Sinn werden alle Proben bezeichnet, die unter den oben genannten Bedingungen innerhalb von maximal zwei Wochen ein Biomassewachstum auf dem Polymeren von mindestens 30 mg/l ermöglichen. Bei Polymerblends müssen diese Wachstumsraten für jeden einzelnen polymeren Blendbestandteil erreicht werden.

Nicht kompostierbar in erfindungsgemäßem Sinn sind Proben, die unter den oben genannten Bedingungen innerhalb von maximal 2 Wochen ein Biomassewachstum von höchstens 5 mg/l ermöglichen.

Der Gegenstand der vorliegenden Erfindung soll anhand der folgenden Beispiele noch näher erläutert werden.

### Beispiele

### Beispiel 1

0,200kg kg Cellulose (Holzzellstoff) werden in 3,2 l Wasser und 0,8 kg NaOH 30 Minuten aufgerührt. Die Alkalisierungstemperatur beträgt 60 bis 70°C. Anschließend wird filtriert, die Cellulose in einem Liter H₂O aufgeschlemmt, nochmals abfiltriert - zur schnelleren Trocknung kann jeweils in 0,6 l und 0,4 l Aceton aufgeschlemmt und abfiltriert werden - und anschließend im Vakuumtrockenschrank getrocknet.
12,31 g der so gewonnenen Alkalicellulose werden unter Stickstoffatmosphäre in 150 g Dimethylsulfoxid vorgequollen und zu dieser Suspension bei 150°C 90,05 g ε-Caprolacton ε-Caprolacton unter Rühren hinzugetropft. Das molare Verhältnis von Cellulose zu beträgt hierbei 1:10.
Der entstehende Cellulosehydroxycarbonsäureester geht dabei unter Anstieg der Viskosität in Lösung.
Nach 1 bis 2 h Reaktion wird die entstandene Lösung unter Rühren in 2 l Wasser gegeben und das erhaltene Produkt abfiltriert.
Der Cellulosehydroxycarbonsäureester wird durch Waschen mit Wasser von DMSO und weiteren Verunreinigungen gereinigt und anschließend getrocknet. Der mittlere Substitutionsgrad wird durch Elementaranalyse und Festkörper-NMR bestimmt.
Ausbeute: 83 g (81 % der Theorie)
Mittlerer Substitutionsgrad: 8,4
Das Biomassewachstum beträgt nach einer Testdauer von 14 Tagen 427 mg/l.

### Beispiel 2

Die Aktivierung der Cellulose und Reaktionsdurchführung erfolgt wie im Beispiel 1, mit dem Unterschied, daß 63,36 g ε-Caprolacton zur Reaktion gebracht werden und damit das molare Verhältnis von Cellulose zu ε-Caprolacton 1:7,5 beträgt.
Ausbeute: 63,0 g (84 % der Theorie)
Mittlerer Substitutionsgrad: 5,9
Das Biomassewachstum beträgt nach einer Testdauer von 14 Tagen 389 mg/l.

### Beispiel 3

Die Aktivierung der Cellulose und Reaktionsdurchführung erfolgt wie im Beispiel 1, mit dem Unterschied, daß 42,24 g ε-Caprolacton zur Reaktion gebracht werden und damit das molare Verhältnis von Cellulose zu ε-Caprolacton 1:5 beträgt.
Ausbeute: 47,0 g (86 % der Theorie)
Mittlerer Substitutionsgrad: 4,0
Das Biomassewachstum beträgt nach einer Testdauer von 14 Tagen 377 mg/l.

### Beispiel 4

15 g Holzzellstoff werden in 350 g DMSO suspendiert.
Bei 60 bis 70°C werden 30 g 20 %iger Natronlauge hinzugetropft und 30 Minuten lang gerührt. Anschließend wird das im Reaktionsansatz vorhandene Wasser abdestilliert, bis mittels Brechungsindex im Reaktionsgefäß kein Wasser mehr nachzuweisen ist. Anschließend werden 112,4 g ε-Caprolacton bei 60 bis 70°C hinzugetropft und das Reaktionsgemisch 0,5 h bei 60 bis 70°C gerührt. Das molare Verhältnis von Cellulose zu ε-Caprolacton beträgt hierbei 1:10.
Nach dem Reaktionsende wird die erhaltene Lösung in 1,5 l Wasser eingerührt, der ausgefällte Cellulose-6-hydroxyhexansäureester abfiltriert, mit Wasser von DMSO und anderen Verunreinigungen befreit und abschließend getrocknet.
Ausbeute: 95,6 g (75 % der Theorie)
Mittlerer Substitutionsgrad: 7,2
Das Biomassewachstum beträgt nach einer Testdauer von 14 Tagen 521 mg/l.

### Beispiel 5

Die Aktivierung der Cellulose und Reaktionsdurchführung erfolgt wie im Beispiel 4, mit dem Unterschied, daß 79,09 g ε-Caprolacton zur Reaktion gebracht werden und damit das molare Verhältnis von Cellulose zu ε-Caprolacton 1:7,5 beträgt.
Ausbeute: 72,4 g (77 % der Theorie)
Mittlerer Substitutionsgrad: 5,4
Das Biomassewachstum beträgt nach einer Testdauer von 14 Tagen 453 mg/l.

### Beispiel 6

Die Aktivierung der Cellulose und Reaktionsdurchführung erfolgt wie im Beispiel 4, mit dem Unterschied, daß 52,8 g ε-Caprolacton zur Reaktion gebracht werden und damit das molare Verhältnis von Cellulose zu ε-Caprolacton 1:5 beträgt.
Ausbeute: 52,9 g (78 % der Theorie)
Mittlerer Substitutionsgrad: 3,6
Das Biomassewachstum beträgt nach eine Testdauer von 14 Tagen 430 mg/l.

### Beispiel 7

12,3 g Alkalicellulose aus Beispiel 1 werden in 80 g Dioxan und 20 g Dimethylsulfoxid suspendiert und bei 100°C 90,05 g ε-Caprolacton unter Rühren hinzugetropft. Der Reaktionsansatz wird 12 h bei 100°C gerührt und das entstandene Polymer mit Wasser ausgefällt, filtriert und getrocknet.
Ausbeute: 40,8 g (40 % der Theorie)
Mittlerer Substitutionsgrad: 3,4
Das Biomassewachstum beträgt nach einer Testdauer von 14 Tagen 327 mg/l.

### Beispiel 8

Das in Beispiel 1 gewonnene Granulat wird vor der Verarbeitung für 12 Stunden bei 40°C getrocknet und in einer Spritzgußmaschine D 50, Herstellen Fa. Demag, Nürnberg, BRD, bei einer Massetemperatur von 200°C verspritzt. Als Form dient eine bei Raumtemperatur gehaltene ASTM-Zugstabform.
Nach DIN 53 504 wird an diesen Zugstäben eine Reißfestigkeit von 15,4 MPa und eine Bruchdehnung von 25 % bestimmt.

## Patentansprüche

1. Thermoplastische und biologisch abbaubare Cellulosehydroxycarbonsäurester bestehend aus Einheiten der allgemeinen Formel 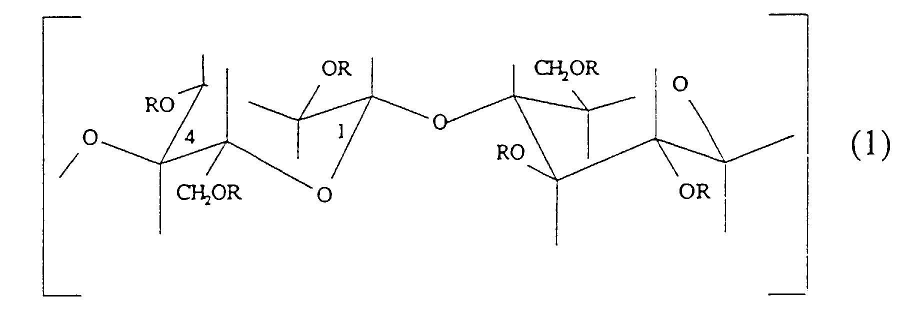 wobei R entweder ein mono- und/oder polymerer Hydroxycarbonsäureester folgender Struktur ist: 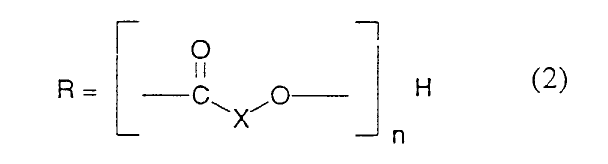 in der x eine verzweigte oder unverzweigte aliphatische Kette mit 2 bis 5 C-Atomen bedeutet und n eine ganze Zahl gleich oder größer als 5 ist, oder R ist entsprechend dem durchschnittlichen Substitutionsgrad gleich H.

2. Cellulose-6-hydroxypolycapronsäureester gemäß Anspruch 1, dadurch gekennzeichnet, daß n größer als 5 ist.

3. Verfahren zur Herstellung von wasserunlöslichen, thermoplastischen und biologisch abbaubaren Cellulosehydroxycarbonsäureester gemäß Anspruch 1 oder 2, dadurch gekennzeichnet, daß die Cellulose ungelöst, d.h. ohne Verwendung cellulosespezifischer Lösungsmittel, mit Lactonen zur Reaktion gebracht wird, wobei man die Cellulose mit Alkalilauge aktiviert und anschließend in Suspension mit Lactonen umsetzt, und wobei der entstehende Celluloseester in dem verwendeten Suspensionsmittel DMSO, DMF, DMAC, Dioxan, Acetonitril, THF, Pyridin, NMP und/oder Methylmorpholin löslich ist.

4. Verfahren nach Anspruch 3, dadurch gekennzeichnet, daß die Cellulose durch Behandlung mit wäßriger Alkalilauge voraktiviert wird.

5. Verfahren nach den Ansprüchen 3 oder 4, dadurch gekennzeichnet, daß die mit Alkalilauge voraktivierte Cellulose in DMSO suspendiert wird.

6. Verfahren nach Anspruch 3, dadurch gekennzeichnet, daß die Aktivierung der Cellulose mit Alkalilauge bereits im Suspensionsmittel stattfindet, wobei nach der Aktivierung das Wasser abdestilliert wird.

7. Verfahren nach den Ansprüchen 3 bis 6, dadurch gekennzeichnet, daß als aliphatische Lactone ε-Caprolacton, δ-Valerolacton, γ-Valerolacton, Butyrolacton, Propiolacton oder Glykolid oder Lactid oder Mischungen aus ihnen mit der alkaliaktivierten Cellulose umgesetzt werden.

8. Cellulosehydroxycarbonsäureester nach einem der Ansprüche 1 oder 2, dadurch gekennzeichnet, daß 1 g dieser Substanz als alleinige Kohlenstoffquelle in 250 ml ASTM-Nährsalzlösung bei einem pH-Wert von 6,8 angeimpft mit 2 ml eines Extraktes aus Gartenkompost bei Schwenken mit 220 Upm bei 37°C unter Luftzutritt innerhalb von höchstens zwei Wochen das Wachstum von mindestens 30 mg/l Biomasse hervorruft und vorzugsweise unter den gleichen Bedingungen innerhalb von höchstens vier Wochen eine Gewichtsabnahme von mindestens 15 Gew.-% zeigt.

9. Biologisch abbaubare Folien, Formteile, Fasern und Blends, dadurch gekennzeichnet, daß sie mindestens zu 10 % aus Cellulosehydroxycarbonsäureestern gemäß den Ansprüchen 1, 2 oder 8 bestehen.

## Claims

1. Thermoplastic and biodegradable cellulose hydroxycarboxylic acid esters consisting of units of the general formula 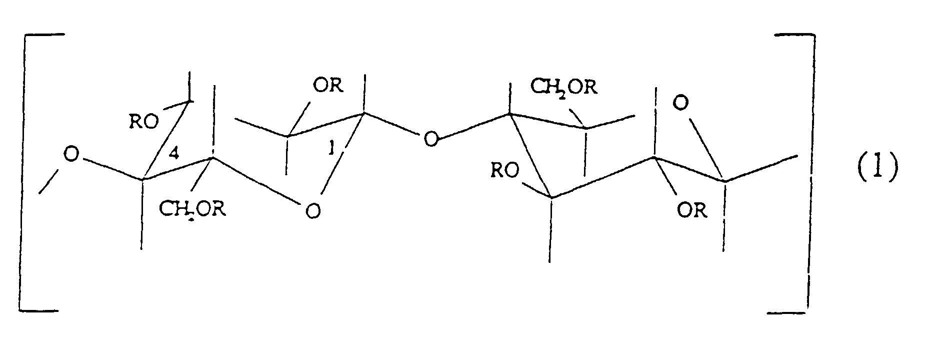 wherein is R is either a mono- and/or polymeric hydroxycarboxylic acid ester of the following structure: 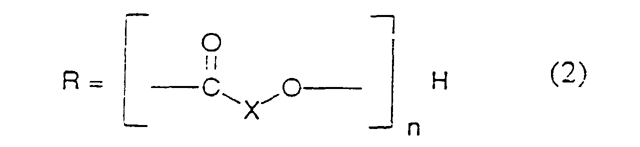 in which x means a branched or unbranched aliphatic chain having 2 to 5 C atoms and n is an integer greater than or equal to 5, or, in accordance with the average degree of substitution, R is equal to H.

2. Cellulose 6-hydroxypolycaproic acid ester according to claim 1, characterised in that n is greater than 5.

3. Process for the production of water-insoluble, thermoplastic and biodegradable cellulose hydroxycarboxylic acid esters according to claim 1 or 2, characterised in that the cellulose is reacted in undissolved form, i.e. without using cellulose-specific solvents, with lactones, wherein the cellulose is activated with alkali metal hydroxide solution and then reacted in suspension with lactones, and wherein the resultant cellulose ester is soluble in the suspending agent used DMSO, DMF, DMAC, dioxane, acetonitrile, THF, pyridine, NMP and/or methylmorpholine.

4. Process according to claim 3, characterised in that the cellulose is preactivated by treatment with aqueous alkali metal hydroxide solution.

5. Process according to claim 3 or 4, characterised in that the cellulose preactivated with alkali metal hydroxide solution is suspended in DMSO.

6. Process according to claim 3, characterised in that the cellulose is activated with alkali metal hydroxide solution in the suspending agent, wherein the water is removed by distillation after activation.

7. Process according to claims 3 to 6, characterised in that the aliphatic lactones reacted with the alkali-activated cellulose are ε-caprolactone, δ-valerolactone, γ-valerolactone, butyrolactone, propiolactone or glycolide or lactide or mixtures thereof.

8. Cellulose hydroxycarboxylic acid esters according to one of claims 1 or 2, characterised in that 1 g of this substance, as the sole carbon source in 250 ml of ASTM nutrient salt solution at a pH value of 6.8 inoculated with 2 ml of a garden compost extract with shaking at 220 rpm at 37°C under aerobic conditions, brings about growth of at least 30 mg/l of biomass within at most two weeks and, preferably, under the same conditions exhibits a weight loss of at least 15 wt.% within at most four weeks.

9. Biodegradable films, mouldings, fibres and blends, characterised in that they consist to an extent of at least 10% of cellulose hydroxycarboxylic acid esters according to claims 1, 2 or 8.

## Revendications

1. Esters hydroxycarboxyliques de cellulose thermoplastiques et biodégradables constitués par des unités répondant à la formule générale 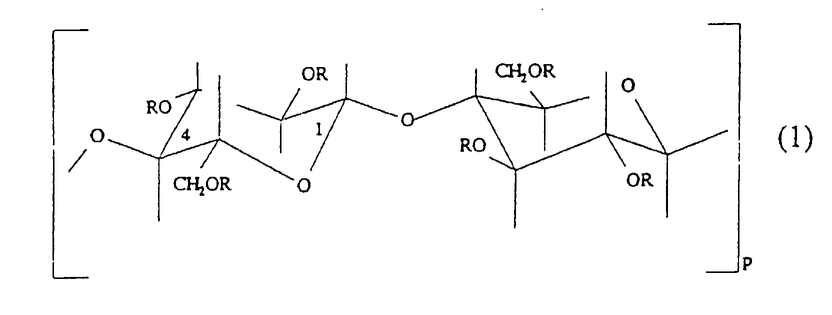 dans laquelle R, soit représente un ester hydroxycarboxylique monomère et/ou polymère possédant la structure ci-après: 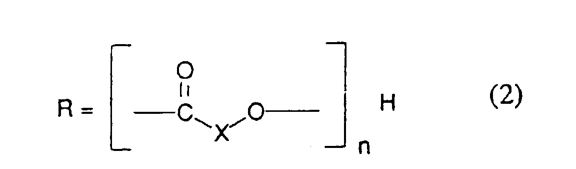 dans laquelle x représente une chaîne aliphatique ramifiée ou non ramifiée contenant de 2 à 5 atomes de carbone et n représente un nombre entier égal ou supérieur à 5, soit est égal à H correspondant au degré de substitution moyen.

2. Ester 6-hydroxypolycaproïque de cellulose répondant à la revendication 1, caractérisé en ce que n est supérieur à 5.

3. Procédé pour la préparation d'esters hydroxycarboxyliques de cellulose, insolubles dans l'eau, thermoplastiques et biodégradables selon la revendication 1 ou 2, caractérisé en ce qu'on amène à réagir avec des lactones, la cellulose à l'état non dissous, c'est-à-dire sans utiliser des solvants spécifiques pour la cellulose, dans lequel on active la cellulose avec une solution alcaline, puis on la fait réagir en suspension avec des lactones, et dans lequel l'ester cellulosique que l'on obtient est soluble dans l'agent de mise en suspension utilisé, représenté par le DMSO, le DMF, le DMAc, le dioxanne, l'acétonitrile, le THF, la pyridine, la NMP et/ou la méthylmorpholine.

4. Procédé selon la revendication 3, caractérisé en ce qu'on soumet la cellulose à une activation préalable par traitement avec une solution alcaline aqueuse.

5. Procédé selon la revendication 3 ou 4, caractérisé en ce qu'on met en suspension dans du DMSO, la cellulose soumise à une activation préalable avec une solution alcaline.

6. Procédé selon la revendication 3, caractérisé en ce que l'activation de la cellulose avec une solution alcaline a lieu déjà dans l'agent de mise en suspension, dans lequel, après l'activation, on sépare l'eau par distillation.

7. Procédé selon les revendications 3 à 6, caractérisé en ce qu'on fait réagir, à titre de lactones aliphatiques, l'ε-caprolactone, la δ-valérolactone, la γ-valérolactone, la butyrolactone, la propiolactone ou encore le glycolide ou le lactide ou encore des mélanges d'entre eux avec la cellulose soumise à une activation alcaline.

8. Esters hydroxycarboxyliques de cellulose selon l'une quelconque des revendications 1 ou 2, caractérisés en ce que 1 g de cette substance, à titre de source de carbone unique dans 250 ml d'une solution de sel nutritif selon la norme ASTM à une valeur de pH de 6,8, inoculée avec 2 ml d'un extrait de compost de jardin par rotation à 220 tours/minute à 37°C avec entrée d'air pendant un laps de temps maximal de 2 semaines, provoque la croissance d'au moins 30 mg/l de biomasse, de préférence manifeste, dans les mêmes conditions, dans un laps de temps maximal de 4 semaines, une diminution de poids d'au moins 15% en poids.

9. Feuilles, corps moulés, fibres et mélanges biodégradables caractérisés en ce qu'ils sont constitués, jusqu'à concurrence d'au moins 10%, par des esters hydroxycarboxyliques de cellulose selon les revendications 1, 2 ou 8.
